# EUROPEAN PATENT APPLICATION

(11) **EP 1 434 339 A2**
(43) Date of publication of application: **30.06.2004**
(21) Application number: 03012685.8
(22) Date of filing: 04.06.2003
(51) Int. Cl.: H02M 5/293

(54) **Circuit for power supply**

(30) Priority: 24.12.2002 EP 02028953
(71) Applicant: Becromal S.p.A., I-20089 Quinto de' Stampi Rozzano (MI) (IT); Elios S.p.A., 20010 Ossona (MI) (IT)
(72) Inventor: Rosenthal, Carole, Dr.-Ing., 20129 Milano (IT); Pitacco, Andrea, Dr.-Ing., 20099 Sesto San Giovanni (IT)
(74) Representative: KEIL & SCHAAFHAUSEN

(57) **Abstract**

A circuit (1) for power supply having a controllable alternating-current voltage is described enabling precise regulation and saving of energy for consumers. Therefore, the amplitude of the input alternating-current voltage (3) is modulated with high frequency compared to the frequency of the input alternating-current voltage (3) thereby cutting off parts of the input alternating-current voltage (3) by means of a chopper-control (2). Further, a respective circuit (1) for power supply having controllable direct-current voltage and the use of the before mentioned circuits (1) for preferred applications are disclosed.

## Description

The present invention relates in particular to a circuit for power supply having a controllable alternating-current (AC) voltage. As the principle of the present invention is also applicable for direct-current (DC) voltage configurations, the present invention relates also to a respective circuit for power supply having a controllable direct-current voltage and the use of the before mentioned circuits for preferred applications.

In order to be able to control an alternating-current voltage by switching off and on parts of the amplitude conventionally a thyristor technology is used with TRIAC or SCR elements working as electronic switch. As the thyristor is extinguished automatically during the zero crossing these semiconductor components can switch off the current only during the natural zero crossing. Thus, for a phase control the thyristor is ignited once during a half wave and is conducting until the zero crossing is reached. Disadvantageous with this thyristor technology is the not-sinusoidal load of the AC mains leading to a distortion of the wave form. Of course, it is possible to switch off the current in any other point or time but this case requires to install a very complicated and expensive additional control circuit which is not worth being installed for cheap applications such as lightening.

Therefore, it is an object of the present invention to provide an easy and cheap circuit for controlling the voltage in particular of an alternating-current which however is also adapted for controlling the voltage of a direct-current.

This object is solved by a circuit having the features of claim 1 in which the amplitude of the input alternating-current voltage is modulated with high frequency compared to the frequency of the input alternating-current voltage thereby cutting off parts of the input alternating-current voltage by means of a chopper-control. A chopper-control allows the switching off and on of the amplitude in desired intervals with a simple electronic circuit. This new technique is based on switching technology that can be applied on several different types of applications. This type of new approach can be applied on a very large power range. The system can be used for ac switching topology and it's designed for low and medium output voltages with a typical range from 12 to 400 Vac, but it can be also developed for higher voltage level. A high switching frequency is not necessary because the most important aspects of this application are the power factor and the very precise regulation that can be obtained with a simple chopper-control. Thus, it is possible to vary the output according to the desired application by an easy and low-cost circuit.

According to a preferred embodiment the cut off parts of the amplitude of the input alternating-current voltage are regularly distributed and/or variably adjustable. This means that the cut off parts of the amplitude can be distributed in equal time intervals leading to an absorption of the output in phase with the voltage. Accordingly, the output wave has a sinusoidal shape as well and the output can be adjusted very precisely with the voltage modulation according to the present invention.

Preferably, the chopper-control includes two transistors connected in opposite pass directions, in particular MOSFET or IGBT transistors, said transistors being controllable by a control circuit. Both transistors can be switched off and on using a simple control circuit in a one phase configuration by biasing the transistors respectively.

The transistors can be connected in a common-source topology, i.e. they are connected in series with each other at their sources. In this case a very simple one phase configuration is realized, in which only the directly biased transistor will lead the current. This means, that in case of positive half waves of the ac-amplitude one transistor and in case of negative half waves of the ac-amplitude the other transistor will conduct current. Therefore, the control circuit does not need a complicated synchronization. Of course, it is also possible to connect the two transistors in parallel in opposite pass directions. In this case a two phase configuration is realized which, however, requires a more complicated control as the two phases have to be synchronized. This might be achieved by a more complex (and more expensive) integrated circuit. In case of the two phase configuration, any consumer connected with one of the two phases can be controlled separately from the consumers connected with the other of the two phases.

In order to control consumers separately in the preferred one phase configuration, two consumers or consumer lines are connected in parallel and disposed in series to the transistors, the circuit having means for blocking a current pass direction disposed in line with each of the two consumers in opposite current pass directions. These blocking means can preferably be diodes disposed in opposite pass directions. Thus, the positive current created by one half wave of the ac-voltage is supplied to one line of consumers and the negative current created by the negative half wave of the ac-voltage is supplied to the other line of consumers. In case the consumers are light emitting diodes (LED), the diodes are already present inside the LED and no further blocking means have to be provided.

The circuit according to the present invention can be advantageously applied if the consumers are lights, especially light emitting diodes. In this case, the control of the output can be used easily and precisely. Further, if the consumers are LED-chains having to different lines of LED the two lines of LED can be separately and differently controlled by the simple control in order to enable the different lines to be lighted at different times creating special effects such as running light chains or other. In this case, with a single one phase control two lines can be controlled.

If several of the before described circuits are disposed in parallel to each other, this concept can be used as well for multi phase applications such as acsynchronous motors, kitchen stoves and other. The principles of the control remain in these cases unchanged. It used for each phase of the multi phase application.

The before described circuit can be used as rectification control for an input alternating-current voltage. It is an effective way for a rectification of the ac- voltage and can be used for several converter applications, such as direct and reverse full bridge converters, with a single and very simple control system. The easiest way for a realisation of a converter will be a control in which only one part of the input half waves are accepted by the chopper-control. However, also more developed rectification can be achieved, such as a typical bridge connection.

A preferred use of the above circuit is the power regulation of electrical consumers by modulation of the input alternating-current voltage. With this switching technology the power regulation can be performed with higher precision and less disturbances on the mains voltage.

Further, it can by used for energy saving by modulation of the input alternating-current voltage for electrical consumers which do not need the complete alternating-current amplitude for their function, especially light emitting diodes or neon-lamps. It has been found, that for some applications the voltage or current can be switched with high frequency without a significant or disturbing loss of intensity in the desired application. An example are LED-lights: human eyes can not note a high frequency difference between a steady state condition and a switching condition if the switching frequency is high. Thus, by applying this type of modulation the power consumption can be reduced reaching the same result. Therefore, the above described circuit might be very advantageously used with LED lights, e.g. light chains, lights built up of several LED's of e.g. different colours and so on. The same applies for neon type lights. Here the human eye can not detect a high switching frequency.

Of course, the above circuit as described for alternation current voltage can also be used for a direct-current voltage configuration without adapting the circuit and/or the chopper-control. In case of a dc-voltage, only one of the transistors of the chopper-control works. In this case the other transistor might be suppressed. However, it is very advantageous to have the same circuit usable as control circuit for ac- and dc-voltage.

Further, the circuit is well suited for an emergency light control. The emergency light might be a LED light consisting of a plurality of single LED's to reach high intensity in case of emergency or a LED-light-chain with more than two controllable light-lines (different LED-chains) in order to built up a guiding system. If the emergency light has a power supply storage, such as a battery or a super-capacitor, a dc-voltage might be applied to the LED in case the normal power supply fails. In this case, the energy saving function of the above circuit is of high importance. Further, this technique might be used for emergency applications without ac-power supply, e.g. warning triangles with red and/or blinking warning lights.

According to the dc-voltage applications, the present invention relates to a circuit for power supply having a controllable direct-current voltage, wherein the amplitude of the input direct-current voltage is modulated with a certain frequency thereby cutting off parts of the input-current voltage by means of a chopper-control.

Such circuit can be realized with a chopper-control including only one transistor, in particular a MOSFET or IGBT transistor, said transistor being controllable by a control circuit. However, as already mentioned, also the circuit for the ac-voltage might be used for the dc-voltage. Further, most of the advantages and features as described above for ac-voltage are also valid for the dc-applications.

Following, preferred embodiments of the present invention are described with reference to the drawing. All aspects, features and advantages mentioned in the description are part of the present invention, even if not addressed in the claims.

It show
- Fig. 1: a circuit according to the present invention in a one phase configuration;
- Fig. 2: the input and output waveform of the ac-voltage;
- Fig. 3: a circuit according to Fig. 1 with the load being LED-lights;
- Fig. 4: a circuit according to Fig. 1 with the load being bulb-lights;
- Fig. 5: a circuit according to the present invention in a two phase configuration;
- Fig. 6: a circuit of an emergency light system with ac or dc power supply according to the present invention;
- Fig. 7: a circuit of a converter according to the present invention;
- Fig. 8: a circuit of a heating application according to the present invention.

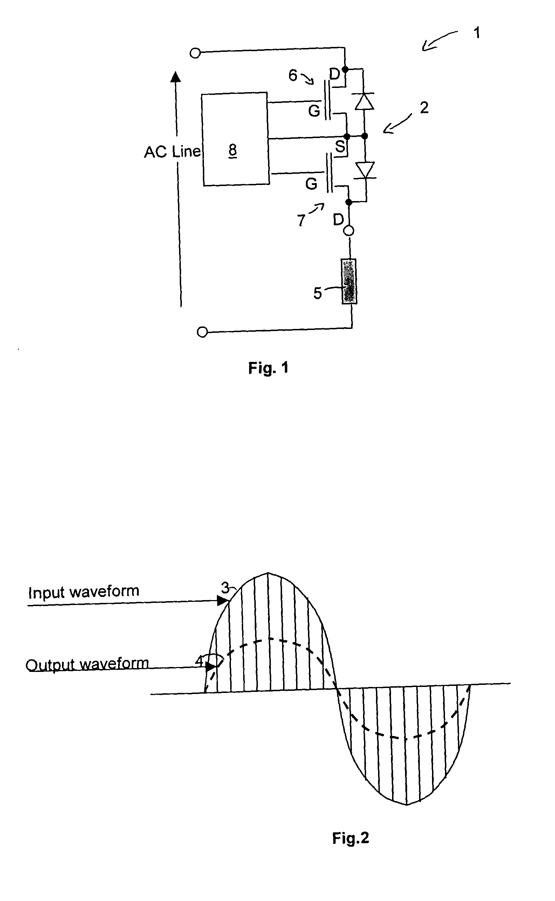

The circuit 1 for power supply, as presented in Fig. 1, having a controllable alternating-current voltage has a chopper-control 2 modulating the amplitude of the input alternating-current voltage 3 with high frequency compared to the frequency of the input alternating-current voltage 3, as shown in Fig. 2. With the modulation, parts of the input alternating-current voltage 3 are cut off by means of the chopper-control 2 resulting in an output alternating-current voltage 4. By cutting off parts of the input alternating-current voltage 3, the voltage can be controlled in order to control the power consumption of a load 5.

The chopper-control 2 includes two transistors 6, 7 connected in opposite pass directions. The two transistors 6, 7 are semiconductors such as MOSFET or IGBT. The new approach according to the invention is based on the electrical connection between two transistors 6, 7 driven by a control circuit 8. The electrical configuration is a common source topology, i.e. the transistors 6, 7 are connected in series having a common source S. This connection permits a very simple driving system without any other complex and additional circuit. The control circuit 8 with independent or common high and low side referenced output channel and high speed MOSFET and IGBT semiconductors allow to reach a high value of switching frequency. In this way, output waveform 4 as illustrated in Fig. 2 can be obtained by modulation using this switching technology.

Describing the circuit of Fig. 1 more in detail, the transistors 6, 7 are fired together by the control circuit 8. The control circuit 8 (with common source) can trigger both semiconductor at the same time. Accordingly, the control circuit 8 is very simple because no synchronization with the lines (corresponding to positive and negative half waves) is needed. The control circuit 8 can trigger both transistors 6, 7 at the same time because only the transistor 6, 7 that is directly biased allows current flow. This means that when the ac-voltage is positive (first positive half wave in Fig. 2) only transistor 6 will conduct current. On the contrary, when the ac-voltage is negative (second negative half wave in Fig. 2) only the transistor 7 can be triggered and can conduct the current. This is the reason why the control circuit becomes very simple and not expensive as no synchronisation of the two transistor lines are necessary.

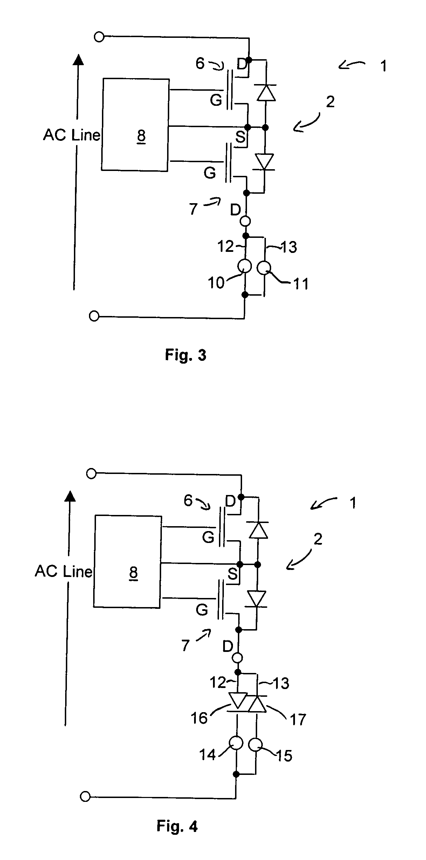

In this circuit 1, the load 5 might be a light emitting diode LED or any other resistor absorbing power of the alternating-current power supply. However, as there are to different lines that can be controlled separately it is advantageous to put several LED's 10, 11 in parallel together in two lines 12, 13 as shown in Fig. 3. If the LED's 10, 11 having a diode present inside the LED are disposed with opposite pass directions in the two separate lines 12, 13 the LED's 10 and 11 will be lightened by the positive and the negative half waves of the alternating-current voltage respectively. Thus, with the circuit 1 having one circuit control 8, two lines of LED's or LED-chains can be controlled. This is interesting for the use of circuit 1 in connection with light chains for producing "running" lights, i.e. lights in two or more different lines that are turned off and on in certain time intervals in order to create the imagination of movement of the LED-lights.

It is also possible to replace the LED's with normal bulb lights 14, 15 as shown in Fig. 4. In this case, only a fine regulation of the power can be obtained by the modulation without any alternating effect. If an alternating effect shall be performed it is necessary to introduce another diode 16, 17 or better a couple of diodes 16, 17 as shown in Fig. 4. The alternating effect is a result of the diodes 16, 17 being disposed in opposite pass directions in the two lines 12, 13 of the separated bulb lights 14, 15. These two diodes 16, 17 have the function of means for blocking one current pass direction.

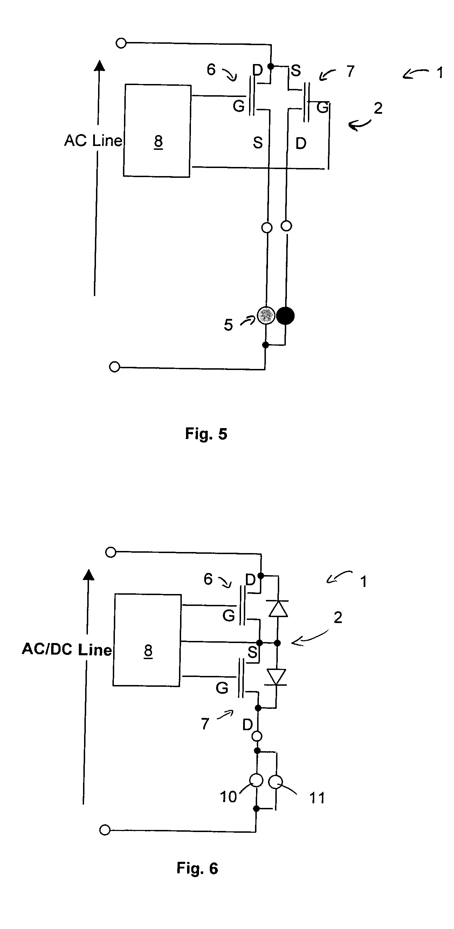

In Fig. 5 a two phase configuration of the circuit 1 is shown, in which the two transistors 6, 7 are not connected in series but in parallel to each other having opposite pass directions. The loads 5 can be LED's or bulb type lights. However, the control circuit 8 is in this case more complicated because the control circuit 8 must trigger only one device (transistor 6 or 7) at a time. When the input voltage is positive the first light (LED 10 or bulb light 14) is to be switched on and when the input voltage is negative the second light (LED 11 or bulb light 15) is to be switched on. Accordingly, the control circuit 8 is more complicated in this two-phase configuration and can be realized by a more complex (and more expensive) integrated circuit. However, in this case both kinds of light (LED or bulb lights) can be used without providing means for blocking one current pass direction.

For example, circuit 1 is well suited for light regulation of LED, bulb or neon type light. The regulation is similar to other regulation types but the most important difference is the switching technology. Normally, light emission and intensity can be adjusted and controlled by means a 50 or 60Hz modulation (Triac or Thyristor). With the switching or chopper technology according to the present invention, the transistors 6, 7 or - more generally - the switching devices are switched off and on several times per unit time (e.g. with a frequency of 1 kHz, i.e. twenty operations per period). This type of regulation allows a very precise adjustment due to the high frequency of switching off and on the voltage in order to determine the output voltage in small steps. Thus, the result of the regulation allows to obtain a true value (r.m.s. value) depending on the duty cycle during the period. If we have a lot of "holes" on the voltage or current waveform the true value (r.m.s. value) will be lower and the intensity will be weaker. This concept can be extended to many other applications as e.g. electrical heating applications for industrial and private use.

It should be understood that the application using LED, bulb or neon type lights are only one example for the use of the circuit 1. This circuit 1 can be used for many different types of loads, especially for loads having a resistance. For all kinds of loads a very cheap power control can be achieved that does not disturb the power mains and allows a very precise regulation. This is in comparison with known thyristor controls a decisive advantage of the present invention.

Further, circuit 1 can be used for saving energy with applications in which the input voltage or current can be switched off and on with high frequency without a notable intensity reduction. An example is the use of LED lights. Human eyes cannot note a difference between a steady state condition or a switching condition if the switching off and on is performed with high frequency. The same applies to neon type lights. If this type of wave modulation or switching technology is applied the power consumption of consumers can be reduced which do not need the full alternating amplitude for their function.

Both effects, the easy control of two different consumer lines with one simple control circuit and/or the energy saving can be advantageously used for an emergency light control. In this case the supply can be an ac or a dc supply as the chopper control 2 is able to work with both, ac and dc voltage or current. Accordingly, it is usable for emergency guide lights in buildings, aircrafts etc.. Normally, this lights can work with a ac power supply, however, in case of failure of the ac power supply a dc emergency power supply, such as batteries, accumulators or super-capacitors, can be used to supply the lights. In the last case, the energy saving effect is of high importance as the available energy is limited. As shown in Fig. 6, the power supply can be an ac or a dc line. In case of a dc line only transistor 6 works, the second transistor 7 might not be present.

Another application using both effects are lights built up of several coloured LED, e.g. red, yellow and green, that are disposed regularly in differently controllable lines, e.g. in one line for each colour. Thus, a controlled mixture of the coloured LED's can produce light of any desired colour. The different lines can be easily controlled with the chopper control 2 of circuit 1 according to the present invention and the light has low energy consummation.

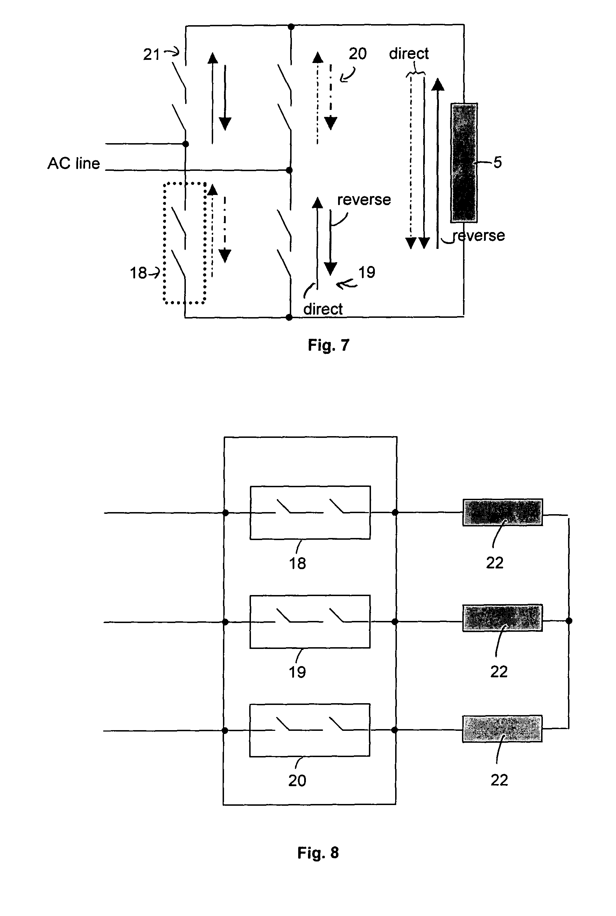

In Fig. 7 a further application of the circuit 1 according to the present invention is shown. It is related to a converter application for rectification of the ac-voltage. Generally, direct and reverse full bridge converters can be realized with the present invention having a single and very simple control system. The block diagram shows a typical bridge connection with a regenerative or bi-directional load 5 and four switches 18, 19, 20, 21. Each switch is made of the typical circuit 1 as shown in Fig. 3. With the same control a direct bridge and a reverse bridge can be regulated in a very simple manner. In Fig. 7, the first arrows represent the direct and the last arrows represent reverse operation. This concept can also be used to control a DC motor.

A further application is presented in Fig. 8 showing static switches 18, 19, 20 for a heating application with a precise and fast regulation. The heating devices, e.g. resistors 22, are connected in parallel each provided with a static switch 18, 19, 20. One switch 18, 19, 20 is built up by a circuit as shown in Fig. 3 or 4. With the same concept according to the present invention it is possible to control the amount of current in the heating devices 22 and thus the final temperature.

As is evident from the above, the circuit 1 according to the present invention can be used for regulation and energy saving of a plurality of applications, such as light regulation for LED, bulb or neon types of light, halogen lamps, emergency light system control, energy saving, converter applications (direct and reverse full bridge converter with a single and very simple control system), static switches for heating applications with precise and fast regulation, simple motor drivers for ac and dc motors, etc.

### Reference signs:

- 1: circuit
- 2: chopper-control
- 3: input alternating-current voltage
- 4: output alternating-current voltage
- 5: load
- 6, 7: transistor
- 8: control circuit
- 10,11: LED's
- 12,13: lines
- 14,15: bulb lights
- 16,17: diodes
- 18 to 21: switches
- 22: resistor, heating device

## Claims

1. Circuit for power supply having a controllable alternating-current voltage, **characterized in that** the amplitude of the input alternating-current voltage (3) is modulated with high frequency compared to the frequency of the input alternating-current voltage (3) thereby cutting off parts of the input alternating-current voltage (3) by means of a chopper-control (2).

2. Circuit according to claim 1, **characterized in that** the cut off parts of the amplitude of the input alternating-current voltage (3) are regularly distributed and/or variably adjustable.

3. Circuit according to claim 1 or 2, **characterized in that** the chopper-control (2) includes two transistors (6, 7) connected in opposite pass directions, in particular MOSFET or IGBT transistors, said transistors (6, 7) being controllable by a control circuit (8).

4. Circuit according to claim 3, **characterized in that** the transistors (6, 7) are connected in a common-source topology.

5. Circuit according to claim 3 or 4, **characterized by** two consumers (10, 11, 14, 15) connected in parallel and disposed in series to the transistors (6, 7), the circuit (1) having means for blocking a current pass direction (10, 11, 16, 17) disposed in line with each of the two consumers (10, 14; 11, 15) in opposite current pass directions.

6. Circuit according to claim 5, **characterized in that** the consumers (10, 11, 14, 15) are lights, especially light emitting diodes.

7. Circuit according to one of the previous claims, **characterized in that** several circuits (1) are disposed in parallel to each other.

8. Use of a circuit according to one of claims 1 to 7 as rectification control for an input alternating-current voltage (3).

9. Use of a circuit according to one of claims 1 to 7 for power regulation of electrical consumers (5, 10, 11, 14, 15) by modulation of the input alternating-current voltage (3).

10. Use of a circuit according to one of claims 1 to 7 for energy saving by modulation of the input alternating-current voltage (3) for electrical consumers (5, 10, 11, 14, 15) which do not need the complete alternating-current amplitude for their function, especially light emitting diodes or neon-lamps.

11. Use of a circuit according to one of claims 1 to 7 for a direct-current configuration.

12. Use of a circuit according to one of claims 1 to 7 for an emergency light control having advantageously a power supply storage, such as a battery or a super-capacitor.

13. Circuit for power supply having a controllable direct-current voltage, **characterized in that** the amplitude of the input direct-current voltage is modulated with a certain frequency thereby cutting off parts of the input direct-current voltage by means of a chopper-control (2).

14. Circuit according to claim 13, **characterized in that** the chopper-control (2) includes at least one transistor (6), in particular a MOSFET or IGBT transistor, said transistor (6) being controllable by a control circuit (8).
